# EUROPÄISCHE PATENTANMELDUNG

(11) **EP 2 112 615 A1**
(43) Veröffentlichungstag der Anmeldung: **28.10.2009**
(21) Anmeldenummer: 08154860.4
(22) Anmeldetag: 21.04.2008
(51) Int. Cl.: G06F 21/20

(54) **Verfahren und Vorrichtung zum Überprüfen einer Nutzungsberechtigung eines Nutzers**

(71) Anmelder: pbf project business factory GmbH, 10178 Berlin (DE)
(72) Erfinder: Dr. Fitzner, Manfred, 13127, Berlin (DE); Kaffl, Maximilian Günther, 10407, Berlin (DE)
(74) Vertreter: Betten & Resch

(57) **Zusammenfassung**

Bei einem Verfahren zum Überprüfen einer Nutzungsberechtigung eines Nutzers für zumindest eine Anwendungssoftware-Komponente mit einer Kennwortüberprüfung, wobei ein erstes Kennwort beim Aufruf der Anwendungssoftware-Komponente einzugeben ist, um mindestens eine Funktion der Anwendungssoftware-Komponente freizuschalten, werden die Schritte vorgeschlagen: Bereitstellen einer von der Anwendungssoftware-Komponente unabhängig lauffähigen Überwachungssoftware-Komponente, welche zumindest das erste Kennwort für eine freizuschaltende Funktion der Anwendungssoftware-Komponente enthält; Aufrufen der Überwachungssoftware-Komponente durch den Nutzer; Aufrufen der Anwendungssoftware-Komponente durch die Überwachungssoftware-Komponente und Übergeben des ersten Kennworts von der Überwachungssoftware-Komponente an die Anwendungssoftware-Komponente; und Überprüfen des ersten Kennworts auf Richtigkeit, und, wenn das übergebene erste Kennwort richtig ist, Freischalten der freizuschaltenden Funktion der Anwendungssoftware-Komponente, oder, wenn das übergebene erste Kennwort falsch ist, nicht Freischalten der freizuschaltenden Funktion der Anwendungssoftware-Komponente.

## Beschreibung

Die vorliegende Erfindung betrifft ein Verfahren und eine Vorrichtung zum Überprüfen einer Nutzungsberechtigung eines Nutzers für zumindest eine Anwendungssoftware-Komponente mit einer Kennwortüberprüfung.

Bekannte Anwendungssoftware-Produkte, wie beispielsweise die Produkte des Office Pakets der Fa. Microsoft, bieten einem Nutzer die Möglichkeit, ein Dokument mit einer entsprechenden Anwendungssoftware zu erstellen, zu öffnen, zu bearbeiten und zu speichern. Die Anwendungssoftware unterstützt den Nutzer bei der Nutzung durch eine Vielzahl von verschiedenen Funktionen, unter anderem bieten eine Vielzahl von Anwendungssoftware-Produkten dem Nutzer die Möglichkeit, eigene teilweise sehr umfangreiche Anwendungen, im Folgenden allgemein Anwendungssoftware-Komponenten genannt, mit Hilfe einer in der Anwendungssoftware bereitgestellten Programmierumgebung insbesondere einer Programmiersprache, wie beispielsweise Visual Basic for Applications (VBA) im Office-Paket, zu programmieren, um Berechnungen durchzuführen oder Arbeitsabläufe und Schritte zu vereinfachen oder zu automatisieren. Diese selbst programmierten Anwendungssoftware-Komponenten können anderen Nutzern für eine Nutzung zur Verfügung gestellt werden, die über die entsprechende Anwendungssoftware verfügen, für die die Anwendungssoftware-Komponenten programmiert sind.

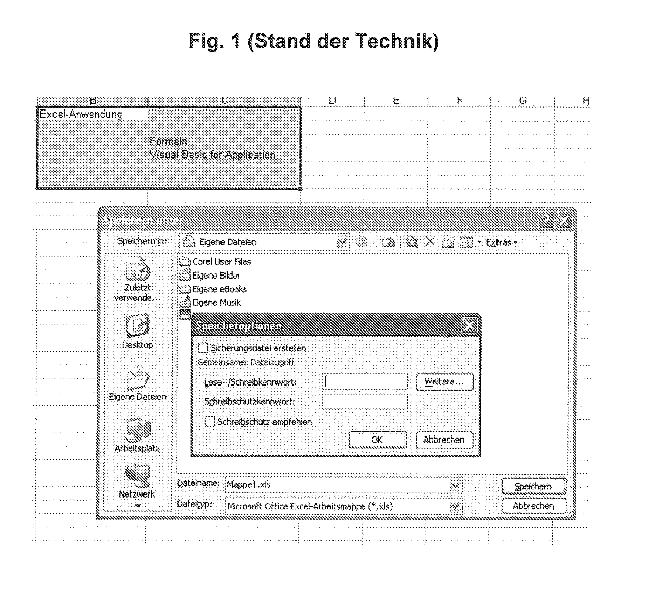

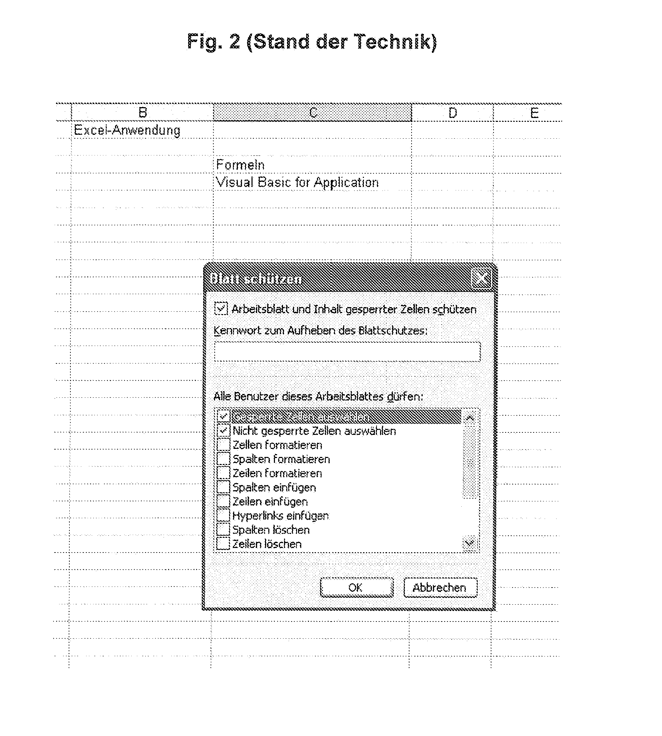

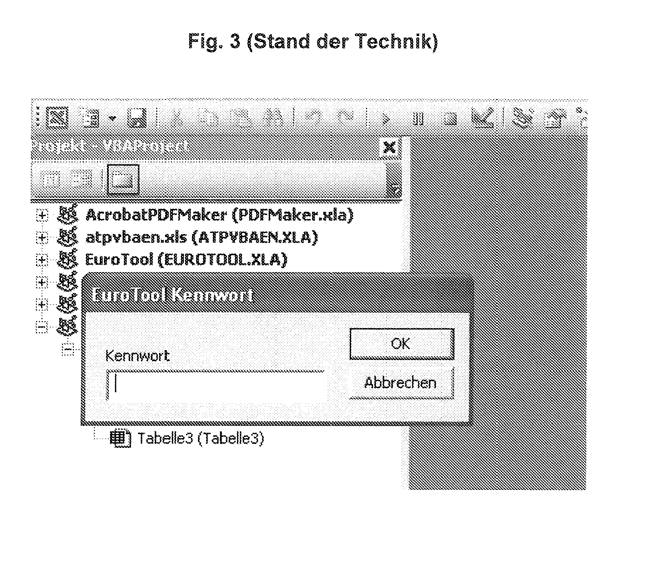

Die bekannten Anwendungssoftware-Produkte, wie beispielsweise Microsoft Excel aus dem Microsoft Office Paket, bieten darüber hinaus dem Nutzer der Anwendungssoftware die Möglichkeit, bestimmte Funktionen in selbst programmierten Anwendungssoftware-Komponenten, wie beispielsweise das Öffnen einer Excel-Mappe, in der eine Vielzahl von Rechenfunktionen programmiert sind, durch ein vorgegebenes Kennwort, wie in Fig. 1 als Lese/Schreibkennwort, in Fig. 2 als Kennwort für gesperrte Zellen in Excel-Mappen und in Fig. 3 als Kennwort für VBA-Programmcode, vor einem Zugriff durch Unberechtigte zu schützen. Dabei ist in Fig. 1 ein typischer Dialog von Microsoft Office zur Eingabe eines Lese-/Schreibkennworts zum Schützen eines gesamten Dokumentes insbesondere des VBA-Programmcodes, in Fig. 2 ein typischer Dialog von Microsoft Excel zur Eingabe eines Blattschutzkennworts zum Schützen einer Tabelle oder eines Diagrammes und in Fig. 3 ein typischer Dialog von Microsoft Office zur Eingabe eines Kennworts für den VBA-Programmcode dargestellt. Typischerweise ist beispielsweise eine Excel-Mappe derart kennwortgeschützt, dass sie vollständig oder nur bezüglich einzelner Funktionen mit dem Kennwort als Schlüssel mit Hilfe eines Verschlüsselungsverfahrens verschlüsselt ist.

Das Kennwort wird dann bei Aufruf einer bestimmten Funktion, hier beispielsweise das Öffnen der kennwortgeschützten Excel-Mappe, mittels der Anwendungssoftware abgefragt und der Nutzer muss das entsprechende Kennwort eingeben. Die Nutzung der Funktion, die in der Anwendungssoftware-Komponente enthalten ist, wird dabei nur dann ermöglicht, wenn das vom Nutzer eingegebene Kennwort mit dem vorgegebenen Kennwort der Anwendungssoftware-Komponente übereinstimmt. Der damit bereitgestellte Schutzmechanismus kann beispielsweise den Schutz des geistigen Eigentums des Entwicklers der Anwendungssoftware-Komponente insbesondere einer Beschränkung des Zugriffs auf Berechtigte gewährleisten.

Die überprüfung der Kennwörter selbst wird durch eine bereitgestellte, interne Funktion zur Kennwortüberprüfung durchgeführt, wobei das eingegebene Kennwort mit dem vorgegebenen Kennwort der Anwendungssoftware-Komponente verglichen oder durch Anwendung des umgekehrten Verschlüsselungsverfahren mit dem eingegebenen Kennwort als Schlüssel entschlüsselt wird. Im Falle der Übereinstimmung der Kennwörter oder erfolgreicher Entschlüsselung wird die Nutzung der Funktionen freigegeben und im Falle einer Nicht-Übereinstimmung der Kennwörter oder nicht erfolgreicher Entschlüsselung, beispielsweise durch Falscheingabe infolge des Nichtkennens des Kennwortes, wird die Nutzung der Funktion nicht freigegeben, d.h. die Excel-Mappe kann beispielsweise nicht geöffnet werden, und der Nutzer wird über die eingetretene Nicht-Übereinstimmung informiert.

Das vorgegebene Kennwort wird bei den bekannten Anwendungssoftware-Produkten in den vorbereiteten Anwendungssoftware-Komponenten in irgendeiner Form abgelegt, d.h. das Kennwort ist bei einigen dieser Anwendungssoftware-Produkte im Klartext und bei anderen durch Benutzung bekannter Verschlüsselungsmethoden in verschlüsselter Form abgelegt, oder wurde als Schlüssel für die Verschlüsselungsverfahren genutzt. Es ist somit möglich, den durch das Kennwort beabsichtigten Schutz durch einfache, bekannte Verfahren abzuschwächen oder zu umgehen, und so die Überprüfung der Nutzungsberechtigung zumindest teilweise außer Kraft zu setzen. Die einfachen, bekannten Verfahren zur Umgehung des Schutzes der Anwendungssoftware-Komponenten umfassen beispielsweise Auslesen, Verändern oder typischerweise Löschen des Kennworts. Ein effektiver Schutz der Anwendungssoftware-Komponenten für Anwendungssoftware-Produkte ist somit nicht gegeben.

Des Weiteren werden Computer und die dazugehörige Anwendungssoftware heutzutage weitgehend in vernetzten Umgebungen betrieben und vorbereitete Anwendungssoftware-Komponenten für die Anwendungssoftware werden durch eine große Anzahl von Nutzer genutzt. Bei vorbereiteten Anwendungssoftware-Komponenten, die mit bekannter Anwendungssoftware entwickelt wurden, kann jeweils nur ein Kennwort für eine bestimmte Funktion eingegeben werden, In vernetzten Umgebungen, in denen eine große Anzahl von Nutzern die gleiche vorbereitete Anwendungssoftware-Komponente nutzen, müssen daher diese Nutzer das Kennwort oder die Kennwörter für die bestimmten Funktionen kennen. Das bedeutet, dass in vernetzten Umgebungen das Kennwort an jeden berechtigten Nutzer bekannt gegeben werden muss. Ein effektiver Schutz der vorbereiteten Anwendungssoftware-Komponten ist durch eine entsprechend ungeschützte Bekanntgabe für eine Vielzahl von Nutzen nicht möglich.

Darüber hinaus kann die Nutzung von Anwendungssoftware-Komponenten nicht in der Art überwacht werden, dass festgestellt werden kann, wann und wie oft eine Anwendungssoftware-Komponente durch die Nutzer genutzt wird. Damit ist bei entsprechenden Anwendungssoftware-Komponenten eine Lizenzierung in Form der Anzahl berechtigter Nutzungen derzeit nicht möglich.

Eine Überwachung der Nutzung von bestimmten Funktionen ist ebenfalls nicht möglich, da die Kennwörter zur Nutzung der bestimmten Funktionen zumindest den dazu berechtigten Nutzer bekannt gegeben werden müssen. Es ist somit möglich, dass Nutzer die ihnen bekannten Kennwörter an andere Nutzer weitergeben können, ohne dass überprüft werden kann, welcher der Nutzer ein Kennwort weitergegeben hat und an welchen Nutzer das Kennwort weitergegeben worden ist.

Des Weiteren ist eine Änderung der Kennwörter in vernetzten Umgebungen erheblich erschwert, da sowohl die Änderung als auch die neuen Kennwörter den berechtigten Nutzern wiederum bekannt gegeben werden müssen.

Alle diese vorgenannten Nachteile führen dazu, dass die Entwicklung von Anwendungssoftware-Komponenten teilweise nur zögerlich betrieben wird, da eine Überprüfung der Nutzungsberechtigung nicht sicher gewährleistet ist.

Es ist daher Aufgabe der vorliegenden Erfindung ein Verfahren bereitzustellen, das eine Überprüfung einer Nutzungsberechtigung eines Nutzers für eine Anwendungssoftware-Komponente ermöglicht, ohne dass der Nutzer das Kennwort für die freizuschaltende Funktion der Anwendungssoftware-Komponente selbst kennen muss, und welches die Nachteile, die mit herkömmlichen Anwendungssoftware-Komponenten einhergehen, nicht aufweist oder diese zumindest vermindert. Die freizuschaltende Funktion kann dabei im Sinne der Erfindung entweder eine Teilfunktion der Anwendungssoftware-Komponente oder die Anwendungssoftware-Komponente selbst sein.

Erfindungsgemäß wird diese Aufgabe dadurch gelöst, dass ein Verfahren vorgeschlagen wird, das die Schritte aufweist: Bereitstellen einer von der Anwendungssoftware-Komponente unabhängig lauffähigen Überwachungssoftware-Komponente, welche zumindest das erste Kennwort für eine freizuschaltende Funktion der Anwendungssoftware-Komponente enthält, Aufrufen der Überwachungssoftware-Komponente durch den Nutzer. Aufrufen der Anwendungssoftware-Komponente durch die Überwachungssoftware-Komponente und Übergeben des erstes Kennworts für die freizuschaltende Funktion von der Überwachungssoftware-Komponente an die Anwendungssoftware-Komponente, und Überprüfen des ersten Kennworts auf Richtigkeit, und, wenn das übergebene erste Kennwort richtig ist, Freischalten der freizuschaltenden Funktion der Anwendungssoftware-Komponente, oder, wenn das übergebene erste Kennwort falsch ist, nicht Freischalten der freizuschaltenden Funktion der Anwendungssoftware-Komponente. Das Verfahren ermöglicht, dass die einzelnen Nutzer der kennwortgeschützten Anwendungssoftware-Komponente das Kennwort zur Freischaltung der Funktion nicht mehr kennen müssen und dadurch der Schutz vor unberechtigter Nutzung verbessert wird.

Gemäß einem weiteren Aspekt der Erfindung wird vorgeschlagen, dass das Verfahren beim Überprüfen weiterhin umfasst: Entschlüsseln der Anwendungssoftware-Komponente mit dem ersten übergebenen Kennwort, wenn die Anwendungssoftware-Komponente gemäß einem Verschlüsselungsverfahren mit dem ersten Kennwort als Schlüssel verschlüsselt wurde.

Gemäß einem weiteren Aspekt der Erfindung wird vorgeschlagen, dass das Überprüfen ferner umfasst:: Vergleichen des vordefinierten zweiten Kennworts mit dem übergebenen ersten Kennwort, wenn die Anwendungssoftware-Komponente ein vordefiniertes zweites Kennwort aufweist.

Gemäß einem weiteren Aspekt der Erfindung wird vorgeschlagen, dass die Überwachungssoftware-Komponente einen Uzenzschiüssei überprüft, der in einem weiteren Aspekt der vorliegenden Erfindung nutzerspezifisch ist, und der Aufruf der Überwachungssoftware-Komponente nur bei Vorliegen eines gültigen Lizenzschlüssels funktioniert. Dies hat den Vorteil, dass eine Überprüfung der lizenzierten Nutzung der Überwachungssoftware-Komponente und damit auch der Anwendungssoftware-Komponente ermöglicht wird.

Gemäß einem weiteren Aspekt der vorliegenden Erfindung wird vorgeschlagen, dass die Überwachungssoftware-Komponente überprüft, ob der aufrufende Nutzer zum Aufruf der Überwachungssoftware-Komponente und der Anwendungssoftware-Komponente berechtigt ist. Dies hat den Vorteil, dass eine nutzerspezifische Berechtigung zur Nutzung vergeben und überprüft werden kann.

Gemäß einem anderen Aspekt der Erfindung wird vorgeschlagen, dass die Anwendungssoftware-Komponente wiederholt überprüft, ob die Überwachungssoftware-Komponente ausgeführt wird, und, wenn festgestellt wird, dass die Überwachungssoftware-Komponente nicht ausgeführt wird, die Anwendungssoftware-Komponente benachrichtigt wird, dass die Überwachungssoftware-Komponente nicht ausgeführt wird. Dies ist vorteilhaft, da somit die Nutzungsberechtigung der Anwendungssoftware-Komponente während der gesamten Zeitdauer der Nutzung überprüft werden kann und damit der Schutz vor unberechtigter Nutzung weiter verbessert wird.

Gemäß einem weiteren Aspekt der vorliegenden Erfindung umfasst das Benachrichtigen der Anwendungssoftware-Komponente, das Beenden der freigeschalteten Funktion der Anwendungssoftware-Komponente oder das Beenden der Anwendungssoftware-Komponente selbst. Der vorteilhafte Effekt wird dabei dadurch erreicht, dass die Anwendungssoftware-Komponente nur genutzt werden kann, wenn die Überwachungssoftware-Komponente ausgeführt wird, womit eine Verbesserung der Nutzungsüberwachung erreicht wird.

Gemäß einem weiteren Aspekt der Erfindung umfasst das Verfahren der vorliegenden Erfindung zusätzlich die Schritte: Überprüfen der Anwendungssoftware-Komponente durch die Überwachungssoftware-Komponente insbesondere auf eine berechtigte und eine unberechtigte Nutzung von Funktionen der Anwendungssoftware-Komponente durch einen Vergleich der genutzten Funktion mit der freigeschalteten Funktion durch die Überwachungssoftware-Komponente, wobei, wenn die genutzte Funktion mit der freigeschalteten Funktion nicht übereinstimmt, die unberechtigte Nutzung festgestellt wird, und, wenn die genutzte Funktion mit der freigeschalteten Funktion übereinstimmt, die berechtigte Nutzung festgestellt wird, und Benachrichtigen der Anwendungssoftware-Komponente, wenn festgestellt wird, dass die Nutzung unberechtigt ist. Weiterhin kann die Anwendungssoftware-Komponente gemäß einem weiteren Aspekt der Erfindung durch den Schritt des Benachrichtigens beendet werden. Die Überwachung der berechtigten Nutzung kann damit weiter verbessert werden, da eine unberechtigte Nutzung erkannt wird.

Die Erfindung betrifft ferner ein Computerprogramm, dass, wenn es auf einem Computer abläuft, diesen steuert, das erfindungsgemäße Verfahren auszuführen und eine Vorrichtung zum Überprüfen einer Nutzungsberechtigung eines Nutzers für zumindest eine Anwendungssoftware-Komponente, die eine Kennwortüberprüfungseinrichtung hat, wobei ein erstes Kennwort beim Aufruf der Anwendungssoftware-Komponente einzugeben ist, um mindestens eine Funktion der Anwendungssoftware-Komponente freizuschalten. Die Vorrichtung umfasst eine von der Anwendungssoftware-Komponente unabhängig lauffähige Überwachungssoftware-Komponente, die durch den Nutzer aufrufbar ist. Die Überwachungssoftware-Komponente umfasst wiederum eine Kennwortspeichereinrichtung, in der zumindest das erste Kennwort für eine freizuschaltende Funktion der Anwendungssoftware-Komponente gespeichert ist, eine Aufrufeinrichtung, die dazu ausgelegt ist, die Anwendungssoftware-Komponente aufzurufen und an die Kennwortüberprüfungseinrichtung der Anwendungssoftware-Komponente das erste Kennwort zu übergeben, und die Kennwortüberprüfungseinrichtung der Anwendungssoftware-Komponente dazu ausgelegt ist, des übergebene erste Kennwort auf Richtigkeit, und, wenn das übergebene erste Kennwort richtig ist, Freischalten der freizuschaltenden Funktion der Anwendungssoftware-Komponente, oder, wenn das übergebene erste Kennwort falsch ist, nicht Freischalten der freizuschaltenden Funktion der Anwendungssoftware-Komponente.

Bevorzugte Ausführungsformen der Erfindung werden nachfolgend rein beispielhaft und ohne jegliche Beschränkung anhand der beigefügten Zeichnungen erläutert, in denen:
Fig. 1 einen Ausschnitt einer Bildschirmdarstellung des Vorgebens eines Lese-/Schreibkennwortes für eine Anwendungssoftware-Komponente gemäß dem Stand der Technik zeigt,
Fig. 2 einen Ausschnitt einer Bildschirmdarstellung des Vorgebens eines Kennwortes für einen Teil einer Anwendungssoftware-Komponente gemäß dem Stand der Technik zeigt,
Fig. 3 einen Ausschnitt einer Bildschirmdarstellung des Vorgebens eines Kennwortes für einen programmierten Teil einer Anwendungssoftware-Komponente gemäß dem Stand der Technik zeigt,
Fig. 4 ein Ablaufdiagramm der Ausführungsform gemäß einem ersten Aspekt der vorliegenden Erfindung zeigt,
Fig. 5 ein Ablaufdiagramm der Ausführungsform gemäß einem weiteren Aspekt der vorliegenden Erfindung zeigt,
Fig. 6 ein Ablaufdiagramm der Ausführungsform gemäß einem weiteren Aspekt der vorliegenden Erfindung zeigt,
Fig. 7 ein Ablaufdiagramm, das den Ablauf der Lizenzierung und Erteilung der Nutzungsberechtigung der Überwachungssoftware-Komponente gemäß der vorliegenden Erfindung zeigt,
Fig. 8 eine schematische Darstellung der Vorrichtung gemäß einem weiteren Aspekt der vorliegenden Erfindung ist.

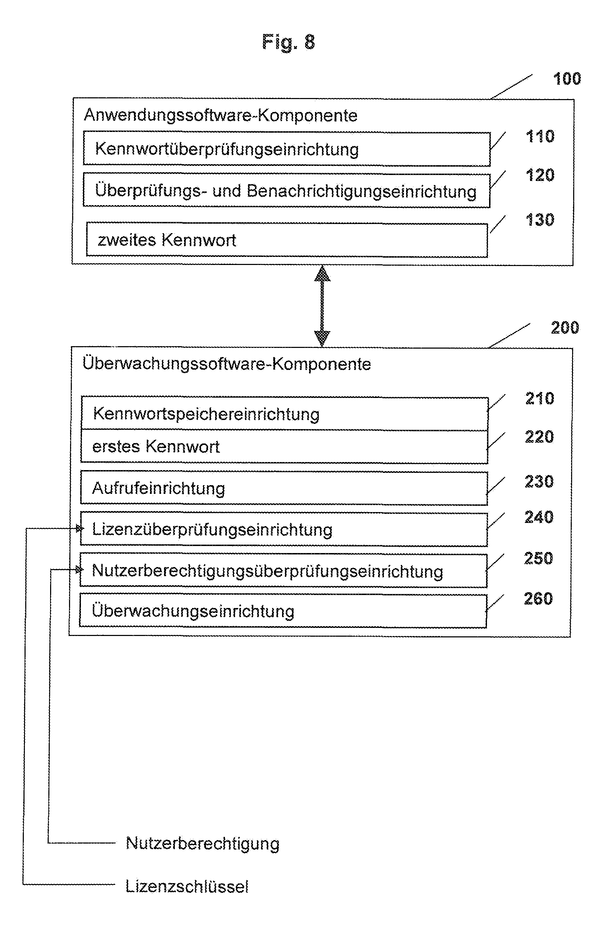

Die nachfolgenden Verfahren gemäß Ausführungsformen der Erfindung werden jeweils mit Bezug zu der in Fig. 8 gezeigten Vorrichtung gemäß einer Ausführungsform beschrieben.

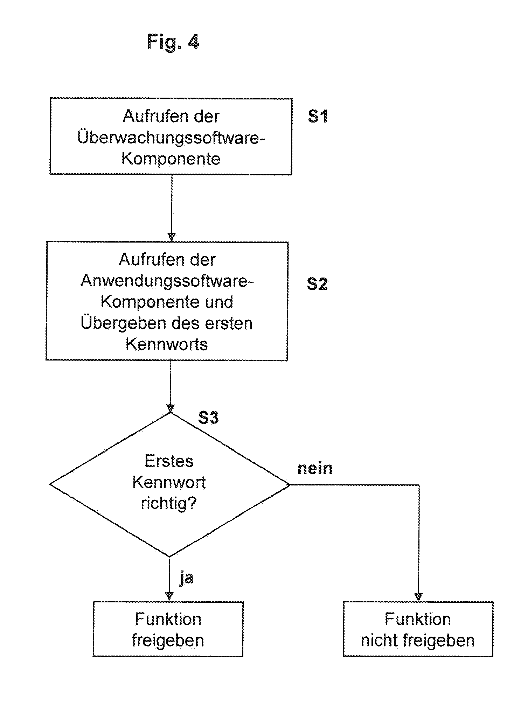

In Fig. 4 ist ein Ablaufdiagramm eines Verfahrens einer ersten Ausführungsform der vorliegenden Erfindung gezeigt. Gemäß dem Verfahren kommen eine Anwendungssoftware-Komponente 100 und eine Überwachungssoftware-Komponente 200 zum Einsatz, die beide in der gleichen Betriebssystemumgebung auf dem Computer eines Nutzers lauffähig sind. Die Überwachungssoftware-Komponente 200 ist dabei unabhängig von der Anwendungssoftware-Komponente 100 lauffähig, d.h. die Überwachungssoftware-Komponente 200 kann aufgerufen oder ausgeführt werden, ohne dass die Anwendungssoftware-Komponente 100 ausgeführt werden muss, Die Überwachungssoftware-Komponente ist allgemein dazu ausgelegt, eine andere Software-Komponente und hier vorzugsweise die Anwendungssoftware-Komponente zu kontrollieren und bei Eintritt von entsprechenden Ereignissen, auf diese geeignet zu reagieren und beispielsweise gemäß einem Ausführungsbeispiel das Ausführen der Programmierumgebung der Anwendungssoftware-Komponente zu verhindern, wenn der Nutzer hierzu nicht berechtigt ist. Die Funktionen der Überwachungssoftware-Komponente werden nachfolgend im Einzelnen beschrieben.

Die Anwendungssoftware-Komponente 100 hat eine Kennwortüberprüfungseinrichtung 110 und weist eine Vielzahl von Funktionen auf. Zum Schutz einzelner oder aller Funktionen gibt der Nutzer zumindest ein erstes Kennwort 220 bei der Erstellung oder Bearbeitung der Anwendungsoftware-Komponente 100 ein.

Das erste Kennwort 220 wird gemäß einem Ausführungsbeispiel als Schlüssel für ein Verschlüsselungsverfahren verwendet, mit weichem die Anwendungssoftware-Komponente verschlüsselt ist. Insoweit erfolgt keine Ablage des ersten Kennworts 220 in der Anwendungssoftware-Komponente 100 und die Anwendungssoftware-Komponente enthält in diesem Fall kein zweites Kennwort 130 wie in Fig. 8 gezeigt, sondern die Anwendungssoftware-Komponente verarbeitet lediglich das erste Kennwort wie weiter unten näher beschrieben.

In einem weiteren Ausführungsbeispiel ist das erste Kennwort 220 als ein zweites Kennwort 130 in der Anwendungssoftware-Komponente 100 in irgendeiner, auf dem Gebiet der Anwendungssoftwsre-Komponenten, bekannten Art abgelegt. Beispielsweise ist das erste Kennwort 220 ein Lese-/Schreibkennwort, mit dem eine Lese-/Schreibfunktion der Anwendungssoftware-Komponente 100 geschützt werden soll. Damit der Nutzer die Funktionen nutzen kann, die mit dem ersten Kennwort 220 geschützt sind, muss der Nutzer ein Kennwort in die Kennwortüberprüfungseinrichtung 110 eingeben. Die Kennwortüberprüfungseinrichtung 110 überprüft das eingegebene Kennwort auf Richtigkeit, und gibt die geschützten Funktionen zur Nutzung frei, wenn die Kennwörter übereinstimmen oder das eingegebene Kennwort der richtige Schlüssel für die Entschlüsselung ist.

Die vom Verfahren bereitgestellte Übenmachungssoftware-Komponente 200 umfasst eine Kennwortspeichereinrichtung 210, in der das erste Kennwort 220 speicherbar ist, und eine Aufrufeinrichtung 230. Das erste Kennwort 220 ist dabei zur Übergabe an die Kennwortüberprüfungseinrichtung 110 der Anwendungssoftware-Komponente 100 vorgesehen und entspricht vorzugsweise dem Kennwort 220 der freizugebenden Funktion der Anwendungssoftware-Komponente 100. Die Aufrufeinrichtung 230 der Überwachungssoftware-Komponente 200 ist dazu ausgelegt, die Anwendungssoftware-Komponente 110 aufzurufen und das erste Kennwort 220 an diese zu übergeben.

Wenn der Nutzer die Überwachungssoftware-Komponente 200 aufruft, wird der Programmablauf der Überwachungssoftware-Komponente 200 in Schritt S1 begonnen und die Überwachungssoftware-Komponente 200 wird ausgeführt. Anschließend wird die Anwendungssoftware-Komponente 100 durch die Überwachungssoftware-Komponente 200 in Schritt S2 aufgerufen. Die Anwendungssoftware-Komponente 100 wird durch den Aufruf in S2 gestartet, In der Anwendungssoftware-Komponente 100 wurden einzelner oder alle Funktionen mit dem ersten Kennwort 220 versehen und die Kennwortüberprüfungseinrichtung 110 zur Überprüfung der Nutzungsberechtigung wird für die Eingabe eines Kennwortes ausgeführt. In Schritt S2 wird nun das in der Kennwortspeichereinrichtung 210 der Überwachungssoftware-Komponente 200 gespeicherte erste Kennwort 220 an die Kennwortüberprüfungseinrichtung 110 der Anwendungssoftware-Komponente 100 übergeben. Nach der Übergabe des ersten Kennworts 220 wird durch die Kennwortüberprüfungseinrichtung 110 in Schritt S3 überprüft, ob das übergebene erste Kennwort 220 richtig ist.

In einem Ausführungsbeispiel, bei dem die Anwendungssoftware-Komponente 100 durch ein Verschlüsselungsverfahren mit dem ersten Kennwort 220 als Schlüssel verschlüsselt wurde, wird in Schritt S3 das Verschlüsselungsverfahren mit dem übergebenen ersten Kennwort 220 als Schlüssel auf die verschlüsselte Anwendungssoftware-Komponente 100 umgekehrt angewendet, um die Anwendungssoftware-Komponente 100 zu entschlüsseln. Für den Fall, dass das übergebene Kennwort dem Schlüssel entspricht, der für die Verschlüsselung der Anwendungssoftware-Komponente 100 verwendet wurde, wird die freizuschaltende Funktion freigeschaltet, anderenfalls bleibt die Anwendungssoftware-Komponente 100 verschlüsselt und die Funktion wird nicht freigeschaltet. Gemäß einer Ausführungsform wird das Verschlüsseln und Entschlüsseln der Anwendungssoftware-Komponente durch die Kennwortüberprüfungseinrichtung 110 ausgeführt.

In einem weiteren Ausführungsbeispiel, bei dem ein zweites Kennwort 130 in der Anwendungssoftware-Komponente 100 abgelegt ist, wird das übergebene erste Kennwort in Schritt S3 mit dem zweiten Kennwort 130 verglichen.Für den Fall, dass in Schritt S3 festgestellt wird, dass das übergebene erste Kennwort 220 nicht mit dem zweiten Kennwort 130 übereinstimmt, wird die Funktion, die freigeschaltet werden soll, nicht freigeschaltet, d.h. die Funktion kann nicht durch den Nutzer genutzt werden.

Weiterhin kann die Kennwortüberprüfungseinrichtung 110 oder die Anwendungssoftware-Komponente 100 eine Benachrichtigung erzeugen, die zum Beispiel eine auf einem Monitor des Computers anzeigbare Fehlermeldung ist, und auf dem Monitor anzeigen. Falls das erste Kennwort 220 mit dem zweiten Kennwort 130 übereinstimmt, wird die freizuschaltende Funktion in der Anwendungssoftware-Komponente 100 freigeschaltet. Das Freischalten einer Funktion in der Anwendungssoftware-Komponente 100 bewirkt, dass die Funktion durch den Nutzer genutzt werden kann. Darüber hinaus kann durch die Anwendungssoftware-Komponente 100 oder die Kennwortüberprüfungseinrichtung 110 eine entsprechende Benachrichtigung erzeugt werden, die beispielsweise der Überwachungssoftware-Komponente 200 übermittelt wird oder dem Nutzer angezeigt wird.

Das Verfahren gemäß der ersten Ausführungsform wird beendet, wenn der Verfahrensschritt S3 erfolgreich abgeschlossen ist, d.h. das erste Kennwort 220 richtig ist. Die Anwendungssoftware-Komponente 100 kann mit der freigeschalteten Funktion weiterhin ausgeführt werden, und der Nutzer kann die freigeschalteten Funktionen nutzen.

Andererseits wird, wenn der Schritt S3 nicht erfolgreich ausgeführt wird, d.h. das erste Kennwort 220 nicht richtig ist, die Anwendungssoftware-Komponente 100 beendet und eine Nutzung ist nicht möglich. Gemäß der Ausführungsform kann die Überwachungssoftware-Komponente 200 nachdem Schritt S3 nicht erfolgreich ausgeführt wurde, den Schritt S2 des Verfahrens erneut ausführen, um beispielsweise zu vermeiden, dass bei der Übergabe des ersten Kennworts 220 an die Kennwortüberprüfungseinrichtung 110 ein Fehler aufgetreten ist. Diese wiederholte Ausführung des Schritts S2 kann beispielsweise durch Hochzählen einen Zählers in der Überwachungssoftware-Komponente 200 gesteuert werden, und kann bei Erreichen eines vordefinierten Wertes des Zählers durch Beendigung der Übarwachungssoftvvare-Komponente 200 abgebrochen werden.

Das in Fig. 4 dargestellte Verfahren gemäß einer Ausführungsform überprüft zusätzlich im Verfahrensschritt 81 einen Uzenzschiüssel mit Hilfe einer Lizenzüberprüfungseinrichtung 240, wobei vorzugsweise die Überwachungssoftware-Komponente durch einen Lizenzschlüssel lizensiert wurde. Den Lizenzschlüssel fordert der Nutzer beispielsweise beim Hersteller oder Lieferanten der Anwendungsssoftware-Komponente 100 durch Übermittlung von Informationen der Umgebung, in der die Anwendungssoftware-Komponente 100 verwendet wird, wie beispielsweise die Prozessor-ID, die Festplattenseriennummer oder die MAC-Adresse des Netzwerkinterfaces, an. Diese Anforderung kann mit Hilfe bekannter Verfahren, wie zum Beispiel Email, erfolgen. Der Hersteller der Überwachungssoftware-Komponente generiert aus diesen übermittelten Informationen durch ein vorgegebenes Lizenzschlüsselgenerierungsverfahren einen Lizenzschlüssel, welcher dem Nutzer mit einem bekannten Übermittlungsverfahren übermittelt wird. Der Lizenzschlüssel wird daraufhin so abgelegt, dass der Überwachungssoftware-Komponente 200 Zugriff auf diesen Lizenzschlüssel ermöglicht wird. Dies kann beispielsweise durch Ablage in einer Konfigurationsdatei in der Umgebung des Nutzers erfolgen. Die Überprüfung des Lizenzschlüssels wird in Schritt S1 nach dem Aufruf der Überwachungssoftware-Komponente 200 durch die Lizenzüberprüfungseinrichtung 240 ausgeführt. Die Lizenzüberprüfungseinrichtung 240 überprüft den Lizenzschlüssel durch Vergleich mit einem Schlüssel, der durch die Ausführung der Lizenzüberprüfungseinrichtung 240 mit Hilfe des oben genannten Lizenzschlüsselgenerierungsverfahren und den Informationen der Umgebung erzeugt wird. Falls der erzeugte Schlüssel mit dem Lizenzschlüssel übereinstimmt, liegt eine berechtigte Nutzung der Überwachungssoftware-Komponente 200 vor, und das Verfahren wird in Schritt S2 fortgesetzt. Für den Fall, dass der erzeugte Schlüssel nicht mit dem Lizenzschlüssel übereinstimmt, wird eine unberechtigte Nutzung der Überwachungssoftware-Komponente 200 angenommen, und das Verfahren wird beispielsweise durch Abbruch des Verfahrensschrittes S1 und eine Benachrichtigung des Nutzers beendet.

Der Lizenzschiüsse! wird in einer weiteren Ausführungsform aus nutzerspezifischen Informationen, wie beispielsweise dem Namen oder dem Anmeldenamen des Nutzers, generiert.

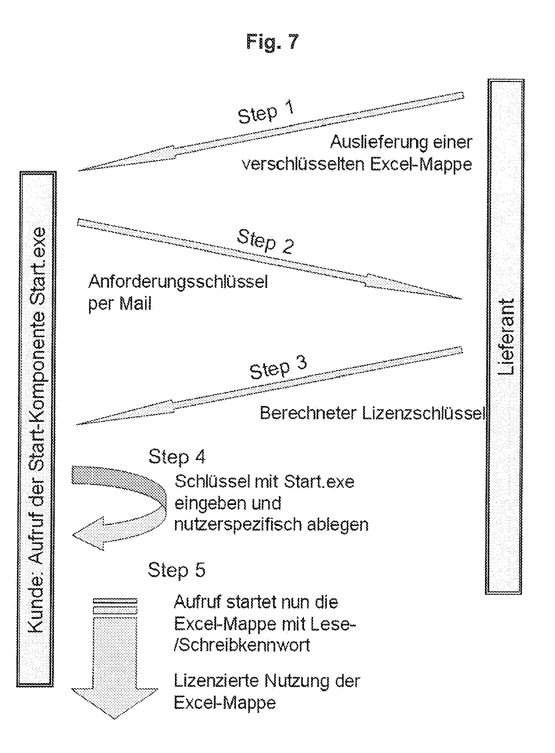

Die oben beschriebene Ausführungsform mit Überprüfung eines Lizenzschlüssels ist beispielhaft in Fig. 7 dargestellt. Der Ablauf der Lizenzierung wird nachfolgend mit Bezug auf Fig. 7 detailliert beschrieben. In Schritt "Step 1" wird durch einen Lieferant oder Hersteller eine Anwendungssoftware-Komponente 100, hier beispielhaft als Excel-Mappe bezeichnet, mit einem ersten Kennwort 220 an den Kunden (Nutzer) ausgeliefert. Der Kunde verfügt des Weiteren über die Überwachungssoftware-Komponente 200, hier als Start-Komponente Start.exe bezeichnet, welche der Kunde aufruf. Dabei wird, wenn noch kein Lizenzschlüssel vorliegt, ein Anforderungsschlüssel in Schritt "Step 2" erzeugt und an den Lieferanten per Email versandt. Aus diesem Anforderungsschlüssel und dem vorgegebenen Lizenzschlüsselgenerierungsverfahren erzeugt der Lieferant einen gültigen Lizenzschlüssel, welchen an den Kunden übermittelt wird (Step 3). Der Lizenzschlüssel wird in die Start-Komponente Start.exe eingegeben und in geeigneter Weise abgelegt (Step 4). Danach erfolgt in Schritt "Step 5" die weitere Ausführung des Verfahrens, wie oben beschrieben.

In einer weiteren Ausführungsform des in Fig. 4 gezeigten Verfahrens wird in Verfahrensschritt S1 zusätzlich überprüft, ob der Nutzer zum Aufruf der Überwachungssoftware-Komponente 200, dem geplanten Aufruf der Anwendungssoftware-Komponente 100 und/oder zum Freischalten der Funktion der Anwendungssoftware-Komponente 100 berechtigt ist. Dazu wird eine Nutzerberechtigungsüberprüfungseinrichtung 250 bereitgestellt, die dazu ausgelegt ist, zumindest die oben genannten Nutzerberechtigungen zu überprüfen. Dabei werden durch die Nutzerberechtigungsüberprüfungseinrichtung 250 die Informationen des aufrufenden Nutzers mit vorgegebenen Berechtigungsinformationen für Nutzer verglichen, die in der Umgebung so abgelegt sind, dass die Nutzerberechtigungsüberprüfungseinrichtung 250 darauf zugreifen kann. Für den Fall, dass die Überprüfung der Nutzerberechtigungen erfolgreich ist, wird das Verfahren in Schritt S2 fortgesetzt. Wenn die Überprüfung jedoch ergibt, dass der aufrufende Nutzer nicht berechtigt ist, kann das Verfahren durch Abbruch der Überwachungssoftware-Komponente 200 beendet werden.

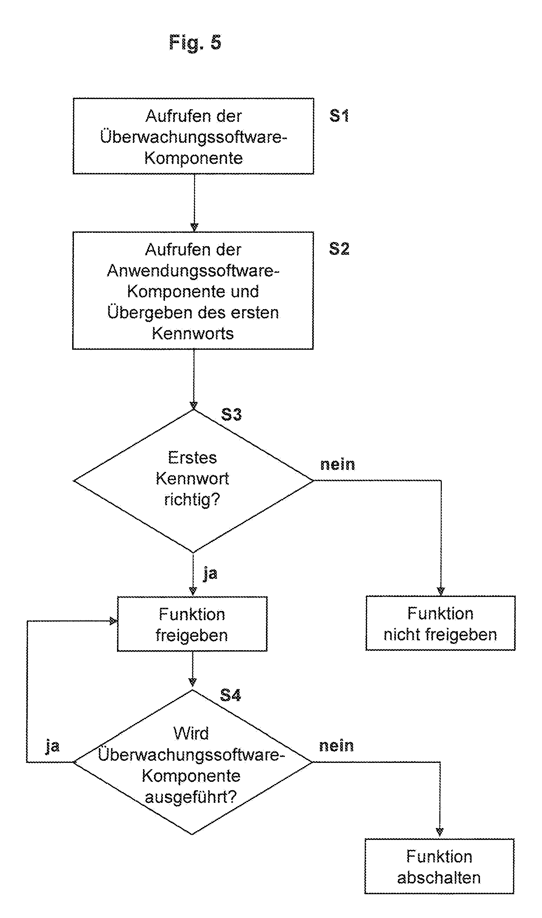

Fig. 5 zeigt ein Verfahren gemäß einer weiteren Ausführungsform, in dem die Verfahrensschritte S1 bis S3 mit denen der Ausführungsform gemäß Fig. 4 übereinstimmen. Das Verfahren dieser Ausführungsform weist zusätzlich einen Verfahrensschritt S4 auf. Zur Ausführung des Schritt S4 ist erforderlich, dass die Überwachungssoftware-Komponente 200 so gestaltet ist, dass sie nach Aufruf der Anwendungssoftware-Komponente 200 in Schritt S3 weiter ausgeführt wird, und, dass die Anwendungssoftware-Komponente 100 mit einer Überwachungs- und Benachrichtigungseinrichtung 120, die vorzugsweise durch Programmierung zusätzlich in der Anwendungssoftware-Komponente bereitgestellt wird, versehen ist. Die Überwachungs- und Benachrichtigungseinrichtung 120 ist dazu ausgelegt, dass sie während der Ausführung der Anwendungssofiware-Komponente 100 wiederholt in einem Schritt S4 überprüft, ob die Überwachungssoftware-Komponente 200 funktionsfähig ist und/oder ausgeführt wird. Dabei können Funktionen genutzt werden, die von der Umgebung oder dem Betriebssystem bereitgestellt werden.

Vorzugsweise überwacht die Überwachungs- und Benachrichtigungseinrichtung 120 die Überwachungssoftware-Komponente 200 mit Hilfe eines vom Betriebssystem bereitgestellten Prozess-Monitoring oder eines anderen geeigneten Mechanismus, der im Stand der Technik zur Überwachung von Softwarekomponenten bekannt ist. Wird bei der Überprüfung in Schritt S4 festgestellt, dass die Überwachungssoftware-Komponente 200 nicht ausgeführt wird, wird die Anwendungssoftware-Komponente 100 benachrichtigt. In weiteren Ausführungsformen kann die Anwendungssoftware-Komponente 100 Funktionen umfassen, die, wenn die Anwendungssoftware-Komponente 100 benachrichtigt wird, die Anwendungssoftware-Komponente 100 so steuern, dass die freigeschalteten Funktionen der Anwendungssoftware-Komponente 100 oder die Anwendungssoftware-Komponente 100 selbst beendet werden. Für den Fall, dass in Schritt S4 festgestellt wird, dass die Überwachungssoftware-Komponente 200 ausgeführt wird, wird die Anwendungssoftware-Komponente 100 nicht benachrichtigt und die Ausführung der Anwendungssoftware-Komponente 100 wird fortgesetzt. Das wiederholte Überprüfen durch die Überwachungs- und Benachrichtigungseinrichtung 120 kann in vordefinierten oder zufälligen Zeitabständen erfolgen.

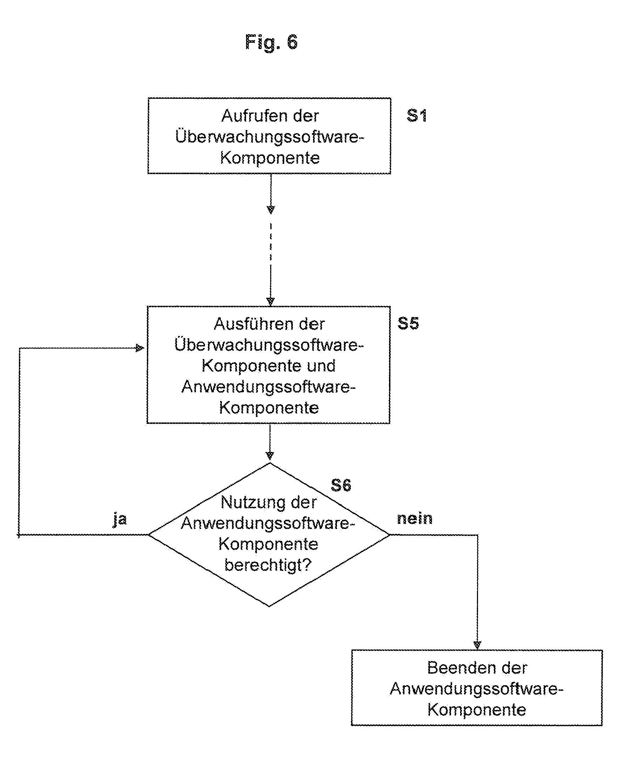

Mit Bezug auf Fig. 6 wird ein Verfahren gemäß einer weiteren Ausführungsform dargestellt, welche die oben beschriebenen Ausführungsformen erweitert. Dazu stellt die in Fig. 8 dargestellte Vorrichtung eine Überwachungseinrichtung 260 für die Überwachungssoftware-Komponente 200 bereit. Die Überwachungseinrichtung 260 ist dazu ausgelegt, insbesondere auf berechtigte und unberechtigte Nutzung von Funktionen der Anwendungssoftware-Komponente 100 zu überwachen. Dazu wird die Überwachungssoftware-Komponente 200 nach Schritt S1 weiter ausgeführt, d.h. das zumindest nach erfolgreicher Ausführung des Schritts S1 in Schritt S5 sowohl die Anwendungssoftware-Komponente 100 als auch die Überwachungssoftware-Komponente 200 ausgeführt werden. Die Überwachungseinrichtung 260 überprüft in Schritt S6 nun die Anwendungssoftware-Komponente 100, um festzustellen, ob die genutzte Funktion mit der freigeschalteten Funktion übereinstimmt. Die Nutzung wird dabei als berechtigt erkannt, wenn die freigeschaltete mit der genutzten Funktion übereinstimmt. Eine unberechtigte Nutzung kann beispielweise dann vorliegen, wenn der Nutzer die Anwendungssoftware-Komponente 200 manipuliert hat, d.h. zum Beispiel den Versuch unternommen hat, das zweite Kennwort 130 zu ändern, zu löschen oder die Schutzmechanismen der Anwendungssoftware-Komponente auszuschalten oder zu umgehen. Gemäß einem Ausführungsbeispiel überprüft die Überwachungssoftware-Komponente Objekte und/oder System-Zugriffie der Anwendungssoftware-Komponente. Wenn eine unberechtigte Nutzung in Schritt S6 festgestellt wird, dann benachrichtigt die Überwachungseinrichtung 260 die Anwendungssoftware-Komponente 100 über die festgestellte unberechtigte Nutzung. Die Anwendungssoftware-Komponente 100 kann daraufhin die freigeschaltete Funktion beenden, um weitere Manipulationsversuche auszuschließen, oder die Anwendungssoftware-Komponente 200 wird selbst beendet. Für den Fall, dass die Überwachungseinrichtung 260 eine berechtigte Nutzung feststellt, wird die Anwendungssoftware-Komponente 100 und die Überwachungssoftware-Komponente 200 weiter normal ausgeführt. Der Schritt S6 kann in einer weiteren Ausführungsform wiederholt in vorbestimmten oder zufälligen Zeitabständen oder, wenn eine Funktion in der Anwendungssoftware-Komponente 200 genutzt wird, ausgeführt werden.

In einer weiteren Ausführungsform überwacht die Überwachungssoftware-Komponente auch, ob weitere Überwachungssoftware-Komponenten in der Umgebung ausgeführt werden oder die Überwachungssoftware-Komponente manipuliert wird.

Bei den oben beschriebenen Ausführungsformen der vorliegenden Erfindung ist die Anwendungssoftware-Komponente 100 jede beliebige Bürosoftware, wie zum Beispiel die Produkte aus dem Microsoft Office Paket, vorzugsweise eine Tabellenkalkulationssoftware, wie zum Beispiel Microsoft Excel, die eine Programmiersprache aufweist, mit der Funktionen programmiert werden können.

Die Ausführungsformen, bei denen die Anwendungssoftware-Komponente ein Produkt aus dem Microsoft Office Paket ist, weisen eine in der Programmiersprache Visual Basic for Applications vorbereitete Komponente auf, die die Funktionalität des Produktes aus dem Microsoft Office Paket erweitert, um das Verfahren der vorliegenden Erfindung auszuführen. Diese vorbereitete Komponente wird vor Verwendung der Anwendungssoftware" Komponente in diese beispielsweise durch Öffnen eines entsprechenden Dokumentes importiert. Über diese importiert Komponente kommuniziert dann die Anwendungssoftware-Komponente aus dem Microsoft Office Paket mit der Überwachungssoftware-Komponente und führt unter anderem den Schritt S4 aus.

Die beschriebenen Ausführungsformen der vorliegende Erfindung können in beliebigen Umgebungen, d.h. auf einem entsprechend eingerichteten elektronischen Gerät, einem Einzelplatzcomputer oder in einer vernetzten Umgebung, ausgeführt werden, die zur Ausführung des Verfahrens geeignet sind. Ebenso können die Ausführungsformen in beliebigen Betriebssystemumgebungen, wie zum Beispiel Microsoft Windows, ausgeführt werden, soweit entsprechende Anwendungssoftware-Komponenten 100 für diese Betriebssystemumgebungen und Umgebungen verfügbar sind. Die Überwachungssoftware-Komponente der beschriebenen Ausführungsformen ist dabei zweckmäßigerweise so gestaltet, dass bereitgestellte Funktionen der Umgebung und/oder des Betriebssystems genutzt werden, ohne diese selbst zu verändern. In den beschriebenen Ausführungsformen sind die Einrichtungen der Anwendungssoftware-Komponente vorzugsweise so bereitgestellt, dass die Umgebung nicht geändert wird.

Die Ausführungsformen der Erfindung werden vorzugsweise als Computerprogramme ausgeführt, die auf einem geeigneten Datenspeicher abgespeichert sind. Weitere bevorzugte Ausführungsformen des Verfahrens können als Digitale Signalverarbeitungsvorrichtung (DSP) oder in einem programmierbaren integrierten digitalen Schaltkreis (FPGA) realisiert werden.

## Patentansprüche

1. Verfahren zum Überprüfen einer Nutzungsberechtigung eines Nutzers für zumindest eine Anwendungssoftware-Komponente mit einer Kennwortüberprüfung, wobei ein erstes Kennwort beim Aufruf der Anwendungssoftware-Komponente einzugeben ist, um mindestens eine Funktion der Anwendungssoftware-Komponente freizuschalten, umfassend die Schritte:
a) Bereitstellen einer von der Anwendungssoftware-Komponente unabhängig lauffähigen Überwachungssoftware-Komponente, welche zumindest das erste Kennwort für eine freizuschaltende Funktion der Anwendungssoftware-Komponente enthält;
b) Aufrufen der Überwachungssoftware-Komponente durch den Nutzer;
c) Aufrufen der Anwendungssoftware-Komponente durch die Überwachungssoftware-Komponente und Übergeben des ersten Kennworts von der Überwachungssoftware-Komponente an die Anwendungssoftware-Komponente; und
d) Überprüfen des ersten Kennworts auf Richtigkeit, und, wenn das übergebene erste Kennwort richtig ist, Freischalten der freizuschaltenden Funktion der Anwendungssoftware-Komponente, oder, wenn das übergebene erste Kennwort falsch ist, nicht Freischalten der freizuschaltenden Funktion der Anwendungssoftware-Komponente.

2. Verfahren nach Anspruch 1, wobei die Anwendungssoftware-Komponente gemäß einem Verschlüsselungsverfahren mit dem ersten Kennwort als Schlüssel verschlüsselt wurde und das Überprüfen in Schritt d) umfasst:
e) Entschlüsseln der Anwendungssoftware-Komponente mit dem ersten übergebenen Kennwort.

3. Verfahren nach Anspruch 1, wobei die Anwendungssoftware-Komponente ein vordefiniertes zweites Kennwort aufweist und das Überprüfen in Schritt d) umfasst:
f) Vergleichen des vordefinierten zweiten Kennworts mit dem übergebenen ersten Kennwort.

4. Verfahren nach einem der vorhergehenden Ansprüche, wobei Schritt b) weiterhin Überprüfen eines Lizenzschlüssels umfasst, wobei die Überwachungssoftware-Komponente nur bei Vorliegen eines gültigen Lizenzschlüssels aufgerufen wird.

5. Verfahren nach Anspruch 4, wobei der Lizenzschlüssel ein nutzerspezifischer Lizenzschlüssel ist.

6. Verfahren nach einem der vorhergehenden Ansprüche, in dem Schritt b) weiterhin Überprüfen einer Nutzerberechtigung umfasst, wobei die Überwachungssoftware-Komponente und die Anwendungssoftware-Komponente nur bei Vorliegen der Nutzerberechtigung aufgerufen wird.

7. Verfahren nach einem der vorhergehenden Ansprüche, gemäß dem die Überwachungssoftware-Komponente nach Aufruf in Schritt b) ausgeführt wird und das Verfahren weiterhin umfasst:
g) wiederholtes Überprüfen durch die Anwendungssoftware-Komponente, ob die Überwachungssoftware-Komponente ausgeführt wird, und, wenn festgestellt wird, dass die Überwachungssoftware-Komponente nicht ausgeführt wird, Benachrichtigen der Anwendungssoftware-Komponente, dass die Überwachungssoftware-Komponente nicht ausgeführt wird.

8. Verfahren nach Anspruch 7, wobei das Benachrichtigen der Anwendungssoftware-Komponente, dass die Überwachungssoftware-Komponente nicht ausgeführt wird, umfasst, dass die freigeschaltete Funktion der Anwendungssoftware-Komponente oder die Anwendungssoftware-Komponente selbst beendet wird.

9. Verfahren nach einem der vorhergehenden Ansprüche, weiterhin umfassend:
h) Überprüfen der Anwendungssoftware-Komponente auf eine berechtigte und eine unberechtigte Nutzung von Funktionen der Anwendungssoftware-Komponente durch einen Vergleich der genutzten Funktion mit der freigeschalteten Funktion durch die Überwachungssoftware-Komponente, wobei, wenn die genutzte Funktion mit der freigeschalteten Funktion nicht übereinstimmt, die unberechtigte Nutzung festgestellt wird, und, wenn die genutzte Funktion mit der freigeschalteten Funktion übereinstimmt, die berechtigte Nutzung festgestellt wird; und
i) Benachrichtigen der Anwendungssoftware-Komponente, wenn festgestellt wird, dass die Nutzung unberechtigt ist.

10. Verfahren nach Anspruch 9, wobei Schritt i) weiterhin umfasst: Beenden der Anwendungssoftware-Komponente.

11. Verfahren nach einem der vorhergehenden Ansprüche, wobei das vordefinierte zweite Kennwort ein Lese-/Schreibkennwort ist, welches eine Lese-/Schreibfunktion der Anwendungssoftware-Komponente freischaltet.

12. Verfahren nach einem der vorhergehenden Ansprüche, wobei die Anwendungssoftware-Komponente eine Bürosoftware oder eine Tabellenkalkulationssoftware ist.

13. Vorrichtung zum Überprüfen einer Nutzungsberechtigung eines Nutzers für zumindest eine Anwendungssoftware-Komponente, die dazu eingerichtet ist, das Verfahren gemäß einem der vorhergehenden Ansprüche auszuführen.

14. Computerprogramm, dass, wenn es auf einem Computer abläuft, diesen steuert, das Verfahren nach einem der Ansprüche 1 bis 12 auszuführen.

15. Datenträger, auf welchem ein Computerprogramm nach Anspruch 14 abgespeichert ist.
